# DEMANDE DE BREVET EUROPEEN

(11) **EP 1 220 346 A1**
(43) Date de publication de la demande: **03.07.2002**
(21) Numéro de dépôt: 01403372.4
(22) Date de dépôt: 27.12.2001
(51) Int. Cl.: H01M 8/02, H01M 8/10

(54) **Element de base composite et son joint pour pile à combustible et procédé de fabrication de l'ensemble**

(30) Priorité: 29.12.2000 FR 0017280
(71) Demandeur: COMMISSARIAT A L'ENERGIE ATOMIQUE, 75752 Paris Cédex 15 (FR)
(72) Inventeur: Mosdale, Renaut, 38640 Claix (FR); Marsacq, Didier, 38000 Grenoble (FR); Escribano, Sylvie, 38000 Grenoble (FR)
(74) Mandataire: Poulin, Gérard

(57) **Abrégé**

Le procédé de fabrication permet d'obtenir un élément de base réunissant une couche électrolytique (11), deux électrodes (12) et un joint (13) en une seule entité, facilement intégrable et gérable.

I1 consiste à utiliser une matrice poreuse (10) dans laquelle est d'abord déposée, sauf à la périphérie, la couche électrolytique (11), puis à déposer, à la périphérie, un unique joint (13) dont l'épaisseur dépasse celle de la couche électrolytique (11). Les deux électrodes (12) sont ensuite déposées au milieu du joint (13) des deux côtés de la couche électrolytique (11).

Application à toutes les piles à combustible.

## Description

### Domaine de l'invention

L'invention concerne le domaine des piles à combustible utilisant un électrolyte solide ou liquide. Les applications concernées sont la production locale ou décentralisée de l'énergie, les transports terrestres, spatiaux ou maritimes. L'échelle de puissance de ces piles à combustible est très étendue, puisqu'elle comprend des matériels mobiles ou portables produisant quelques milliwatts à des installations statiques produisant une puissance de plusieurs kilowatts, par exemple les piles utilisant des électrolytes polymères solides acides ou basiques.

### Art antérieur et problème posé

Les piles à combustible sont des piles électrochimiques constituées d'un empilement d'étages producteurs d'électricité. Chacun d'entre eux comprend une anode et une cathode placées chacune de part et d'autre d'un élément électrolytique. Un réactif différent arrive sur chaque surface extérieure des deux électrodes, à savoir un carburant et un comburant. Ceux-ci réagissent chimiquement par l'intermédiaire de l'élément électrolytique, de sorte qu'il est possible de prélever une tension électrique aux bornes des électrodes.

Un intérêt grandissant a été porté, ces dernières années, aux piles à combustible, dans de très nombreux domaines d'application, quelle que soit leur taille. On pense, par exemple, aux installations stationnaires de grande puissance, comme les piles à combustible à oxyde solide fournissant plusieurs mégawatts. De telles piles à combustible doivent être refroidies en permanence pour évacuer la chaleur résiduelle. On pense également aux piles utilisées pour des petits matériels portables dont la puissance ne doit pas excéder quelques watts, comme les piles à combustible à membrane échangeuse d'ions et les piles à combustible à méthanol direct pour lesquelles le refroidissement n'est pas nécessaire.

Lors de la conception de tous ces différents types de piles à combustible, il est demandé de produire une énergie, dite « propre », c'est-à-dire à émission de gaz toxiques ou à effet de serre faible ou nul, tout en présentant un rendement acceptable. Les technologies utilisant des électrolytes polymères combinent les avantages des piles à combustible fonctionnant à basse température, c'est-à-dire par exemple un démarrage rapide, et des systèmes solides, c'est-à-dire l'absence de fuite de liquide et l'absence de migration du contre-ion (en effet, seul l'ion transportant le courant est mobile). Les éléments de base des piles à combustible sont constitués d'un ensemble comprenant une membrane électrolytique entourée de deux électrodes 2, à savoir une anode et une cathode, qui sont en contact avec elle. La membrane électrolytique peut être constituée soit d'un matériel solide, par exemple de type polymère ou céramique, soit d'un liquide de type acide ou base concentrée ou de sels fondus. Dans le cas de l'utilisation d'électrolytes liquides, ceux-ci sont généralement contenus dans une petite épaisseur de matériau constituant une matrice poreuse, en regard de laquelle sont positionnées les deux électrodes. Les matériaux solides se présentent plutôt sous la forme d'un film, en ce qui concerne les polymères, ou d'un dépôt massif pour ce qui concerne les céramiques.

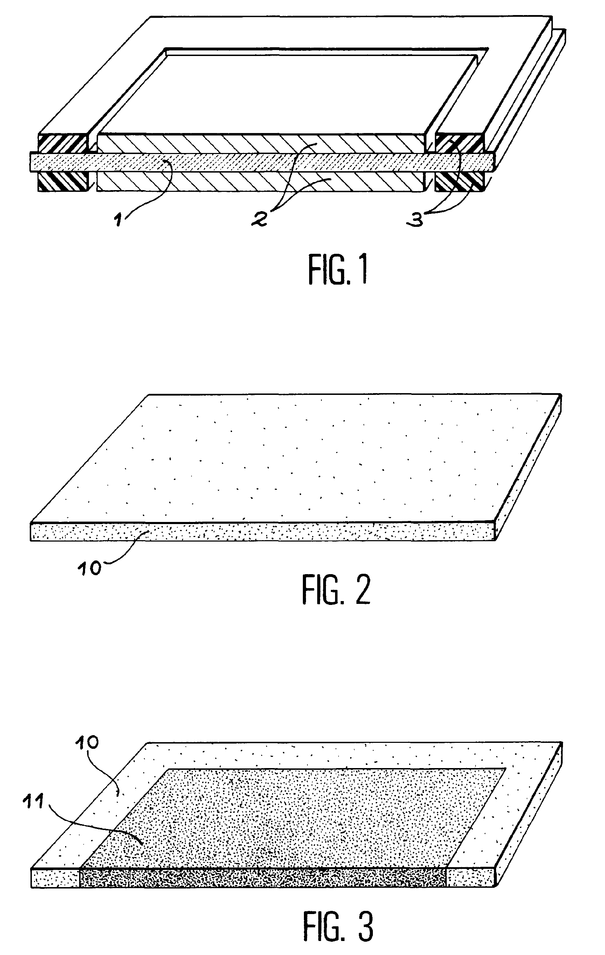

En référence à la figure 1, un exemple d'élément de base de l'art antérieur a été représenté. On y retrouve une membrane ou mince couche électrolytique 1 prise en sandwich entre deux électrodes 2. Ces dernières sont entourées à leur périphérie par un joint 3, placé également de part et d'autre de la surface de la couche électrolytique 1. Un tel joint 3 est utilisé pour assurer l'étanchéité de l'espace où se trouve chaque électrode, contre la couche électrolytique. En d'autres termes, on constate donc que le carburant ou le comburant en contact avec l'une des deux électrodes 2 ne peut pas traverser la couche électrolytique 1 et ne peut pas s'échapper de cet ensemble vers l'extérieur, grâce aux joints 3, compte tenu du fait que cet élément de base est placé entre deux plaques polaires en contact direct avec les joints 3. De manière générale, ces derniers sont plats ou toriques. Ils peuvent être également constitués de matériaux de joint déposés directement sur la membrane électrolytique 1.

Cette technique offre de sérieuses garanties quant à l'étanchéité globale de l'ensemble de l'empilement d'éléments de base, mais génère une utilisation non rationalisée de la couche électrolytique 1 de chaque élément de base. La couche électrolytique 1 est, à ce jour, l'un des composants les plus importants de différents types de piles à combustible, au même titre que les plaques bipolaires de chaque étage et que le catalyseur.

Un but de l'invention est de réduire le coût de fabrication de la pile en réduisant le coût de fabrication, et donc de commercialisation, de chaque élément de base. Des recherches concernant la nature du polymère électrolytique ont déjà été faites, mais d'autres voies peuvent être envisagées, comme l'augmentation de la performance des piles, à savoir la diminution de la résistance, ou l'optimisation de l'utilisation de la membrane électrolytique. C'est cette dernière voie qui est choisie pour atteindre cet objectif, comme le suggère le procédé de fabrication et l'élément de base, selon l'invention.

D'autre part, il s'avère que le positionnement des joints de part et d'autre de l'élément de base comprenant les électrodes et la couche électrolytique peut se révéler problématique, dans une optique de montage en grande série. Un autre but de l'invention est donc de remédier à cet inconvénient.

De ces deux buts découlent plusieurs objectifs qui sont de diminuer le coût de la couche électrolytique, rationaliser l'utilisation de celle-ci, réduire le nombre total de pièces dans l'empilement constituant la pile à combustible et donner une forme à cette dernière facilitant son intégration dans des environnements variés.

### Résumé de l'invention

A cet effet, un premier objet principal de l'invention est un élément de base composite comportant une couche électrolytique entourée de deux électrodes et de son joint, pour pile à combustible, comportant principalement :
- une couche électrolytique ;
- deux électrodes en forme de plaque, accolées de part et d'autre de la couche électrolytique ; et
- un joint placé autour de la couche électrolytique et des électrodes pour étancher l'ensemble constitué de cette couche électrolytique et des deux électrodes.

Selon l'invention, l'élément comprend une plaque en matériau en trame, constituant un support de base aux trois éléments ci-dessus mentionné, d'une épaisseur déterminée correspondant à l'épaisseur de la couche électrolytique et dans laquelle cette couche électrolytique est déposée, sauf à la périphérie, le joint étant déposé uniquement dans et sur la périphérie de cette plaque en matériau en trame, autour de la couche électrolytique.

Il est très avantageux de prévoir que l'épaisseur du joint soit supérieure à l'épaisseur de la couche électrolytique et de la plaque en matériau en trame, la surépaisseur correspondant au moins à l'épaisseur des électrodes déposées de chaque côté de la couche électrolytique.

Dans sa réalisation préférentielle, la plaque en matériau en trame est une matrice poreuse.

Le téflon ou le verre peut être envisagé pour constituer cette matrice poreuse.

Un deuxième objet principal de l'invention est un procédé de fabrication d'un élément de base composite constitué d'une couche électrolytique, de deux électrodes et de son joint, pour une pile à combustible, la couche électrolytique étant constituée d'un dépôt électrolytique dans une matrice poreuse. Le procédé consiste à :
- découper une matrice poreuse à la forme générale de l'élément de base composite et de son joint ;
- déposer dans la matrice poreuse, sur toute l'épaisseur de celle-ci, sauf à la périphérie, un conducteur ionique pour constituer la couche électroyltique ; et
- déposer à la périphérie de la matrice poreuse un matériau de joint avec une surépaisseur de chaque côté de la matrice poreuse correspondant au moins à l'épaisseur de chaque électrode.

Le procédé se complète avantageusement par le dépôt ultérieur d'un matériau constituant les électrodes de chaque côté de la matrice poreuse, en regard du dépôt de conducteur ionique constituant la couche électrolytique, sans dépasser l'épaisseur du joint.

### Liste des figures

L'invention et ses différentes caractéristiques techniques seront mieux comprises à la lecture de la description suivante, accompagnée de plusieurs figures représentant respectivement :
- figure 1, en vue cavalière coupée, un élément de base de pile à combustible de l'art antérieur en vue frontale et vue de dessus ;
- figure 2, en vue cavalière coupée, une matrice poreuse utilisée dans l'élément de base de pile à combustible selon l'invention, en vue frontale et en vue de dessus ;
- figure 3, en vue cavalière coupée, la même matrice poreuse de la figure 2 dans laquelle a été déposée la couche électrolytique, en vue frontale et en vue de dessus ;
- figure 4, en vue cavalière coupée, la même couche poreuse de la figure 3 dans laquelle a été déposé le joint de l'élément de base ; et
- figure 5, en vue cavalière coupée, l'ensemble représenté à la figures 4, complété de deux électrodes.

### Description détaillée d'une réalisation de l'invention

En référence à la figure 2, la première étape de fabrication de l'élément de base selon l'invention consiste à sélectionner la plaque de matériau de trame destinée à constituer la structure support de l'ensemble de l'élément de base.

On prévoit d'utiliser plus spécialement du verre poreux ou du téflon poreux pour constituer une matrice poreuse 10. La forme de cette dernière définie la forme générale de l'élément de base et, par voie de conséquence, la forme de la section de la pile à combustible. Selon l'état de cette matrice poreuse 10 et le matériau qui la constitue, il peut être procédé à un nettoyage ou un traitement chimique. De plus, selon les types de matériaux électrolytique et de joint injectés dans la matrice poreuse 10, la nature et la trame de celle-ci pourront être adaptées. On précise cependant que cette trame devra être suffisamment poreuse, par exemple une porosité ouverte, du type « mat », tissé ou fritté.

En référence à la figure 3, la matrice poreuse 10 est toujours représentée de la même manière. Par contre, la zone foncée qui est centrale, mais qui occupe toute l'épaisseur de la matrice poreuse 10, représente un dépôt de conducteur ionique constituant la couche électrolytique 11. Pour obtenir cette forme qui laisse libre la périphérie des deux grandes surfaces de la matrice poreuse 10, des masques ont été collés à cet endroit pour que le dépôt du matériau électrolytique ne soit pas effectif à cet endroit.

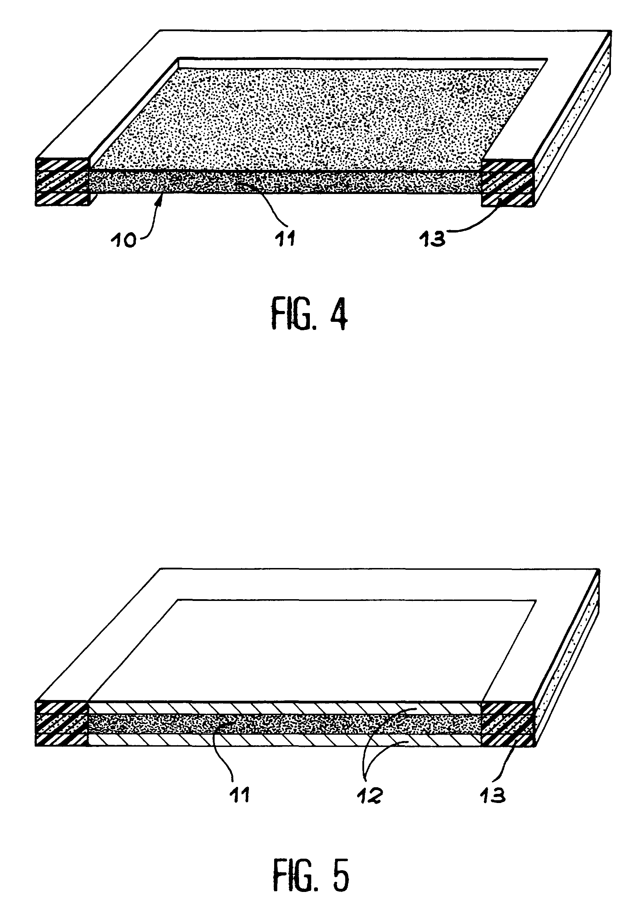

En référence à la figure 4, la phase suivante consiste à déposer le matériau de joint à l'intérieur et sur la partie périphérique de la matrice poreuse 10 qui n'a pas été remplie de matériau électrolytique.

Le matériau utilisé pour constituer le joint 13 ainsi formé doit être en même temps inerte chimiquement et isolant électroniquement et ioniquement. L'épaisseur du joint doit être supérieure à celle de la couche électrolytique 11 pour que les plaques polaires entre lesquelles l'élément de base sera pris en sandwich appuieront sur celui-ci. La forme de ces plaques devra être adaptée à l'épaisseur du joint et à l'épaisseur des électrodes qui prendront place au milieu de lui. Ainsi, l'étanchéité de la partie électrolytique sera assurée lors du serrage de l'empilement.

Enfin, en référence à la figure 5, la dernière phase du procédé selon l'invention consiste à déposer les électrodes 12 contre les deux surfaces principales de la matrice poreuse 10, en regard de la couche électrolytique 11. L'épaisseur des électrodes 12 ne doit pas dépasser la surépaisseur du joint 13 pour que, lors du serrage des différents étages de la pile à combustible, chaque joint 13 puisse être comprimé un tant soit peu. Ce dépôt est possible en utilisant un matériau, tel qu'une poudre de carbone platiné, qui se fixe sur la matrice poreuse 10 déjà imbibée de couche électrolytique 11.

### Avantages de l'invention

Un des principaux attraits de ce procédé d'élaboration d'un tel élément de base par rapport à ceux évoqués dans les premières pages de cette demande de brevet est sa simplicité. En effet, il ne met en jeu que des opérations de dépôt de matériau en suspension ou en solution dans la matrice poreuse et n'utilise, comme accessoire, que des masques.

Cette technique peut être utilisée pour des empilements de piles à combustible du type haute ou basse température, c'est-à-dire réfrigérées ou non, en fonction des caractéristiques des matériaux choisis pour constituer les différents éléments.

Cette technologie permet d'élaborer des cellules ou des éléments de base de piles à combustible dotés de nouvelles géométries, qui peuvent être plus ou moins complexes et adaptées à l'encombrement destiné à la pile à combustible.

La couche électrolytique peut être obtenue directement sans avoir à recourir à des techniques lourdes, telles que l'extrusion ou la coulée de matériau.

L'utilisation de masques et la polymérisation de matériaux déposés directement dans la trame garantit un positionnement idéal des différents éléments, et en particulier pour le joint. L'élément de base ainsi constitué et réunissant les électrodes, la couche électrolytique et un joint ne constitue plus qu'une seule entité, facilement intégrable à l'empilement de la pile à combustible. De plus, les matériaux étant déposés de façon compacte dans l'épaisseur de la matrice poreuse, l'ensemble forme un objet monobloc homogène, imperméable au gaz.

Enfin, le procédé, selon l'invention, permet de limiter les quantités de polymère électrolytique présents dans la pile à combustible ainsi constituée.

## Revendications

1. Elément de base composite du type couche électrolytique/électrodes et son joint d'une pile à combustible, comportant :
- une couche électrolytique (11).
- deux électrodes (12) en forme de plaques, accolées de part et d'autre de la couche électrolytique (11) ; et
- un joint (13) placé autour de la couche électrolytique (11) et des électrodes (12) pour étancher l'ensemble de la couche électrolytique (11) et des deux électrodes (12),
**caractérisé en ce qu'**il comprend une plaque de matériau en trame constituant un support de base pour la couche électrolytique (11), les deux électrodes (12) et le joint (13), et étant d'une épaisseur déterminée correspondant à celle de la couche électrolytique (11), et dans laquelle la couche électrolytique (11) est déposée, sauf à la périphérie, le joint (13) étant déposé uniquement dans et sur ladite périphérie de la plaque de matériau en trame, autour de la couche électrolytique (11).

2. Elément de base composite pour pile à combustible selon la revendication 1, **caractérisé en ce que** l'épaisseur du joint (13) est supérieure à l'épaisseur de la couche électrolytique (11) et de la plaque de matériau en trame, la surépaisseur correspondant au moins à celle des électrodes (12) déposées de chaque côté de la couche électrolytique (11).

3. Elément de base composite pour pile à combustible selon la revendication 1, **caractérisé en ce que** la plaque de matériau en trame est une matrice poreuse (10).

4. Elément de base composite pour pile à combustible selon la revendication 1, **caractérisé en ce que** la matrice poreuse (10) constituant la plaque de matériau en trame est en téflon.

5. Elément de base composite pour pile à combustible selon la revendication 3, **caractérisé en ce que** la matrice poreuse (10) constituant la plaque de matériau en trame est en verre.

6. Procédé de fabrication d'un élément de base composite constitué d'une couche électrolytique (1), de deux électrodes (2) et de son joint (3), pour une pile à combustible, la couche électrolytique (11) étant constituée d'un dépôt électrolytique dans une matrice poreuse (10), le procédé consistant à :
- découper une matrice poreuse (10) à la forme générale de l'élément de base composite et de son joint (13) ;
- déposer dans la matrice poreuse (10), sur toute l'épaisseur de celle-ci, sauf à la périphérie, un conducteur ionique pour constituer la couche électroyltique (11) ; et
- déposer à la périphérie de la matrice poreuse (10) un matériau de joint (13) avec une surépaisseur de chaque côté de la matrice poreuse (10) correspondant au moins à l'épaisseur de chaque électrode (2).

7. Procédé selon la revendication 6, **caractérisé en ce qu'**il se complète par le dépôt ultérieur d'un matériau constituant les électrodes (12) de chaque côté de la matrice poreuse (10), en regard du dépôt de conducteur ionique constituant la couche électrolytique (11), sans dépasser l'épaisseur du joint (13).
